# EUROPEAN PATENT APPLICATION

(11) **EP 0 923 873 A1**
(43) Date of publication of application: **23.06.1999**
(21) Application number: 98830766.6
(22) Date of filing: 17.12.1998
(51) Int. Cl.: A23B 4/10, A23B 4/06

(54) **Icing machine for seafood products**

(30) Priority: 22.12.1997 IT RN970009
(71) Applicant: Meta Meccanica S.r.l., 63038 Ripatransone (AP) (IT)
(72) Inventor: Pennesi, Marco, 63013 Grottammare (AP) (IT)
(74) Representative: Lanzoni, Luciano

(57) **Abstract**

An icing machine (1) for icing seafood products (2), comprises a tank (3) containing water wherein frozen seafood products (2) are immersed; and conveying means (5), movable with respect to the tank (3), to intercept the seafood products (2) immersed in the water and to drive them progressively, above the free surface (16) of the water. The tank (3) presents a first bottom surface (7) shaped in such a way as to present at least a top part (15a) emerging from the free surface (16) of the water and the conveying means comprise sliding elements (5a) movable with respect to the first bottom surface (7) which intercept the seafood products (2) making them progressively climb and descend along each top part (15a) and emerge from the water thereby allowing the water, which laps the emerged products (2), to freeze and coat the products (2) themselves with a layer of ice.

## Description

The present invention relates to the processing of seafood products and in particular to a machine for icing products of small and medium size such as mussels, clams, shell-fish and/or whole and sliced fish.

The icing of seafood products consists of coating the seafood products with a thin layer of clear, shining ice (icing) in order to confer to the products themselves an appearance that makes them, when displayed in selling areas, particularly pleasant and attractive. Another important aspect of the icing is that of protecting the product from excessively low temperatures of the freezers, thereby guaranteeing a longer preservation of those organoleptic characteristics that are typical of the fresh product.

The icing method consists essentially of immersing the product, in the frozen state, into water and subsequently extracting the product from the water exposing it to the air for a relatively short time. Under such conditions, the liquid film that adheres to the product freezes very quickly, due to the low internal temperature of the product, and it forms a film of clear ice adhering to the seafood product.

A known icing machine, constructed according to the preamble to claim 1, essentially comprises a tank containing water at a temperature close to 0°C wherein conveying means operate, provided to take the immersed seafood product and make them emerge progressively out of the water, then conveying them along a route out in the air during which the liquid film that temporarily adheres to the product is frozen.

Such a machine, though widely used in the industry, presents several drawbacks, among them that of entailing significantly high fixed costs per unit of thickness of icing produced; that of requiring large volumes of water in order to obtain a sufficiently shining and clear icing; that of failing to assure that individual products are always iced without mutually adhering; and lastly that of not assuring that the icing thickness be uniformly resistant and free of exterior marks ascribable to the product transformation process.

In regard to costs, it should be noted that in order to obtain an adequate icing thickness, such machines are frequently arranged in succession along a line wherein they alternate in orderly fashion with intermediate refrigeration tunnels. Hence the overall icing layer is obtained by the superposition of successive layers of ice that are formed in each of the machines, whilst the refrigeration tunnels adequately chill the product between one stratification and the next.

As for water consumption, prior art machines employ very significant volumes in order to prevent the water from becoming opaque too rapidly, as a result of the clots which, released naturally by the product, degrade icing quality. This constructive set-up however entails the practical impossibility of replacing the water during a work shift and it also requires high powered water refrigeration systems, which further increase product processing costs.

Lastly, with regard to the means for conveying the products, it should be noted that they comprise meshed conveyor belts which due to their very conformation imprint undesired marks on the icing layer. Such marks on one hand damage the exterior appearance of the product and on the other make the ice layer locally less resistant, thereby diminishing its protective effect on the product.

The aim of the present invention therefore is to eliminate the aforementioned drawbacks by means of an icing machine that is able to obtain in an economical and simple way protective layers of icing with a thickness significantly exceeding that obtainable with conventional machines; that is able to operate with significantly lower water consumption and that allows to replace the water and clean the machine in a rapid and effective manner with short interruptions to the working cycle of the machine.

In accordance with the invention such aims are attained by a machine wherein the tank presents a bottom surface so conformed as to emerge with at least its top part from the free surface ofthe water and wherein the conveying means are embodied by sliding elements which follow the geometry of the bottom surface and are moved in such a way as to let the products periodically emerge and be immersed, thereby allowing the formation on their outer surface of superposed ice layers which successively coat the products leaving them physically separate from one another.

Water is stationary in the machine and it is contained in a quantity correlated with the geometry of the bottom surface so as to define for the products essentially equal routes above and below the free surface of the water.

Underneath the bottom surface, the machine is provided with a gap wherein the solid particles released by the products are deposited, settling, remaining trapped therein without rendering opaque the water of the tank wherein the products being processed are immersed.

The bottom surface can be lifted in order to allow the removal of the accumulated particles and the rapid washing of the tank.

The machine is further provided with a station for the preparation of chilled water wherein the water of the tank is refrigerated by direct contact with ice in the form of chips.

The technical features of the invention, according to the aforesaid aims, can clearly be seen from the content of the claims reported below and its advantages shall become more readily apparent in the detailed description that follows, made with reference to the accompanying drawings, which represent an embodiment provided purely by way of non-limiting example, wherein:
- Figure 1 is a schematic view of the machine showing its principle of operation;
- Figure 2 is an overall perspective view of the machine according to the invention;
- Figure 3 is a view of the machine, represented in enlarged scale, showing some of its constructive details.

With reference to the figures of the accompanying drawings, the number 1 indicates in its entirety an icing machine for automatically icing seafood products 2 of small and medium sizes constituted for instance by mussels, clams, shell-fish and/or whole and sliced fish.

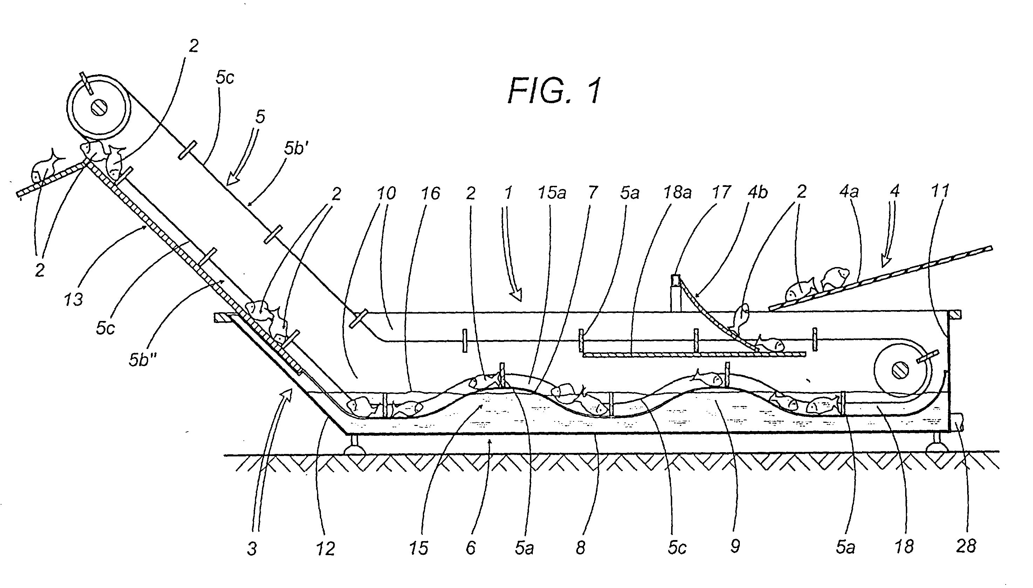

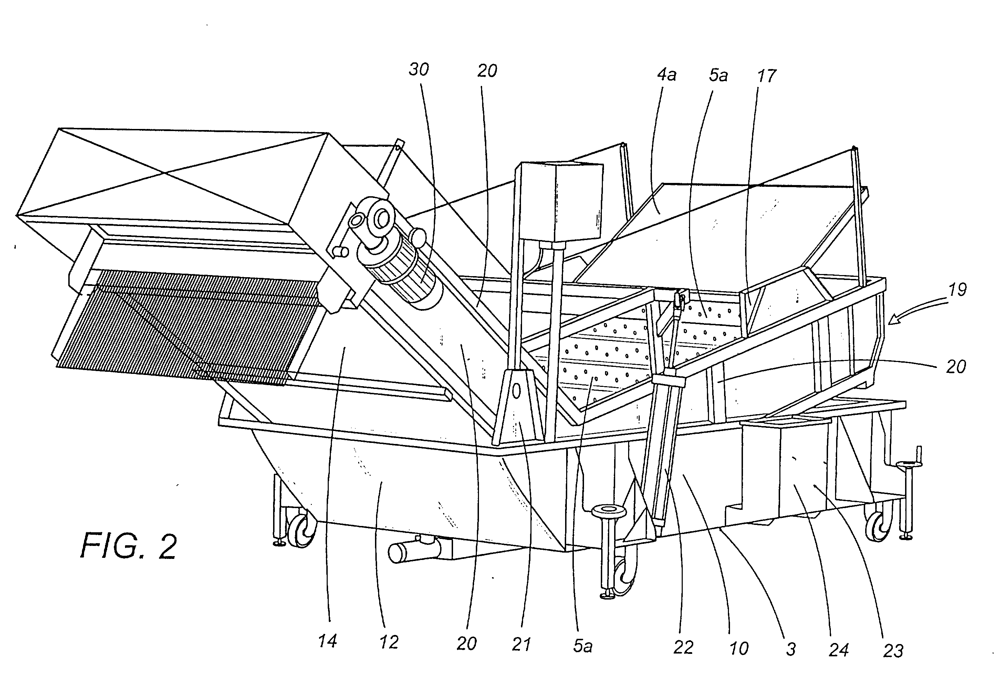

The machine 1 essentially comprises (Figures 1 and 2) a tank 3, containing refrigerated water, fitted with means 4 for introducing and means 5 for conveying the seafood products 2.

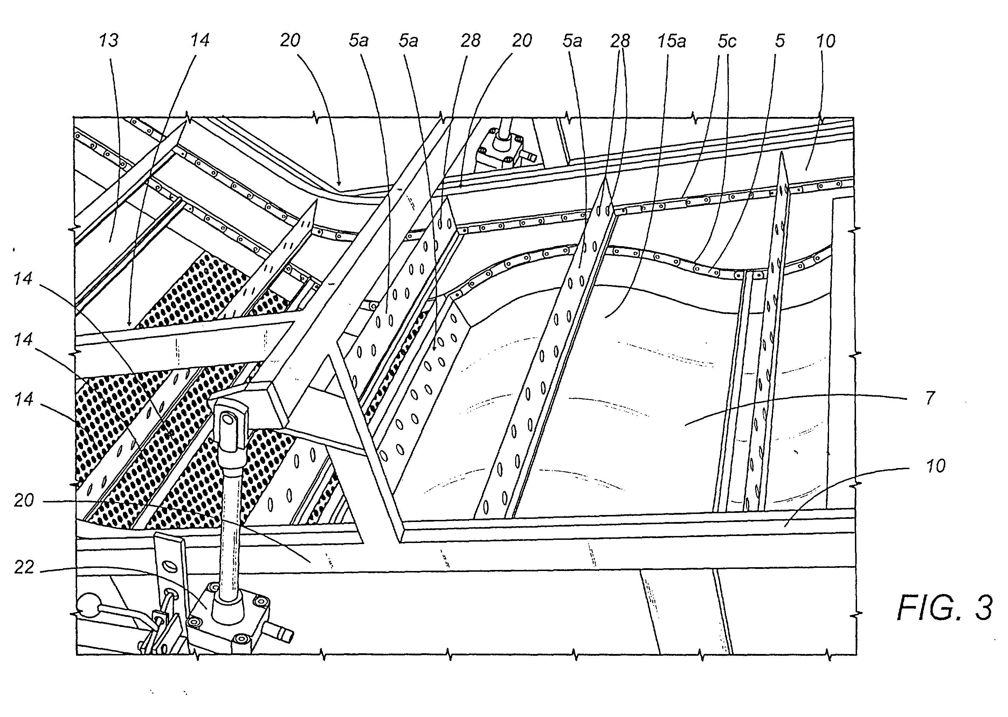

The tank 3 presents a bottom 6 surrounded by side walls 10,11,12 whereof three walls 10,11 are vertical, whilst a fourth wall 12 is oblique instead. The bottom 6 of the tank 3 is constituted by two bottom surfaces 7, 8 mutually superposed. A first bottom surface 7 presents at least a portion traversed by holes 14 (Figure 3) and is so shaped as to present an undulated and sinusoidal curvilinear profile. The second surface 8 instead has essentially plane development and is positioned underneath the first bottom surface 7 so as to define in combination therewith a gap 9 located on the bottom 6 of the tank 3, intermediate to the two surfaces 7,8 and intercommunicating, through the holes 14, with the inner space of the tank 3. The first bottom surface 7 is further joined to a ramp 13, plane, rectilinear, made of polyethylene, which develops parallel to the oblique wall 12 of the tank 3, projects overhanging therefrom above the top of the tank 3 itself and is provided with raceways for water drainage.

The transferring means 5 comprise sliding elements 5a embodied by plane, elongated plates which are borne transversely to the opposed vertical walls 10 of the tank 3 and are supported at their ends by two opposed chains 5b, having two branches 5b',5b" mutually connected to form a loop. The chains 5b are actuated by a gearmotor 30 and are housed internally to guides 5c obtained on the vertical walls 10 of the tank 3. The guides 5c develop for one of the branches 5b" of the chain 5b, proximate to the bottom 6, thereby constantly remaining equidistant initially from the first bottom surface 7 and then from the surface of the ramp 13 itself. Thus during the sliding of the chains 5b along the guides 5c, the sliding elements 5a travel along the lower branch 5b" of the chain 5b constantly remaining in proximity to the first bottom surface 7 and to the surface of the ramp 13.

Refrigerated water is injected into the tank 3 in a quantity correlated with the geometric conformation of the first bottom surface 7 and in any case such as partially to cover with its free surface 16 the first bottom surface 7. In other words, the water content must be such as to allow the humps 15 of the first bottom surface 7 to emerge at least by their top part 15a barely above the free surface of the water.

In regard to the introducing means 4, they comprise a pair of opposed slides 4a,4b, inclined at mutually opposite slopes and positioned above the free surface 16 of the water in proximity to the vertical wall 11 which is opposite to the oblique wall of the tank 3.

A first slide 4a is made of polyethylene. The second slide 4b is made of silicone rubber and it is fastened at its ends so that one of its sides hangs from structural uprights 17 and the other one bears against a horizontal plane 18a. The overall conformation of the introducing means 4 is such as to allow the discharge of the seafood products 2 into the water of the tank 3 exactly in correspondence with a dip 18 in the first bottom surface 7 thereby avoiding scaling and cracking on the outer surface of the seafood product 2 if it comes from a previous icing.

In a preferable embodiment (Figures 2-3), the icing machine 1 presents a tank structure 19 provided with two mutually parallel vertical sides 20 which support the sliding elements 5a, the chains 5b and the related guides 5c and which are fastened to the first bottom surface 7 and to the ramp 13 in correspondence with a pair of their opposite sides. The tank structure 19 is contained inside the tank 3; it is articulated around fixed supports 21 thereof; and it is fastened to a pair of pneumatic cylinders 22 operatively positioned between the tank 3 and the tank structure 19.

The gap 9, which is delimited between the first bottom surface 7 connected to the tank structure 19 and the second bottom surface 8 connected instead to the tank 3, is therefore easily accessible by means of the simple activation of the pneumatic cylinders 22 which serve as means for actuating the relative lifting of the surfaces 7,8 delimiting the gap 9.

Since the water content necessary for the operation of the machine 1 is modest, and as shall become clearer below, does not require frequent replacement during the working day, the machine 1 has the advantage of not requiring a high power system for the preparation of the refrigerated water. For this purpose the machine I can be equipped (Figure 1) with a refrigerating station 23 comprising a very economical mixing heat exchanger 24 containing chips of ice. If the water contained in the tank 3 reaches an excessively high temperature, a thermostatically controlled pump is started to draw the water of the tank 3 and send it to the heat exchanger 24 wherein it flows through the ice, subsequently returning into the tank 3. Obviously the exchanger 24 can be employed also with the refill water which, coming from the external water supply pipeline, is chilled prior to being injected into the machine 1.

In use the icing machine 1 operates according to a sequence that can be described referring to Figure 1. The figure shows that the frozen seafood products 2, released on the first slide 4a, are intercepted by the second slide 4b in a condition of impact damped by the silicone rubber, and then let fall into the water of the tank 3 with no impact against solid parts.

Subsequently, the products 2 immersed in the water are intercepted by the sliding elements 5a and made progressively to climb and descend along the top parts 15a of the first bottom surface 7. The bottom surface 7 is so shaped as to present preferably multiple humps 15 in succession which force the products to immerse into and emerge from the water several times. The humps 15 are moreover designed in such a way as to delimit for the individual seafood products 2 routes of nearly identical length between the immersion and the surfacing phases.

In correspondence with their travelling along each hump 15 the individual products 2 are automatically coated with a layer of ice due to the freezing in air of the water that adheres to the product 2 emerged from the water. Since during such motion the individual products 2 retain a certain freedom of movement with respect to the contiguous products 2, each product 2 is coated with icing whilst remaining strictly detached from the adjacent products. Depending on the number of humps 15 presented by the first bottom surface 7, and possibly also varying the speed of advance of the sliding elements 5a, it is possible to coat the product 2 with a more or less thick layer of ice. Once they reach the junction area between the first bottom surface 7 and the ramp 13 the seafood products 2 are thrust by the sliding elements 5a to the top of the ramp 13 continuing on towards a packaging station not shown herein.

Since the first bottom surface 7 is holed and since the water is still, aside from the agitation imparted by the sliding elements 5a (which can be further reduced by drilling holes 28 on the sliding elements 5a themselves), the clots and solid particles naturally released by the various products 2 succeeding each other in the tank 3 come to settle and accumulate in the bottom gap 9. The water therefore remains clear for most of the operating cycle of the machine 1 thereby allowing to obtain a shining and clear icing. When the water should nonetheless become excessively opaque, by lifting the tank structure 19 access can quickly be gained to the gap 9 to remove the parts accumulated therein by a simple washing with a jet of water which, exiting from a discharge conduit 28, removes the solid products contained therein.

The icing machine 1 is then refilled with water refrigerated in the refrigerating station 23 and the operating cycle can start anew.

The icing machine 1 according to the invention fully attains the aims of obtaining in an economical manner, with limited water consumption, a seafood product 2 coated with an icing layer of a thickness exceeding that obtainable with conventional machines; thickness which can then be varied at will both by varying the number of humps 15 of the first bottom surface 7, and possibly also varying the speed of the sliding elements 5a.

The invention thus conceived may be subject to numerous modifications and variations, without thereby departing from the scope of the inventive concept. Moreover, all components may be replaced with technically equivalent elements.

## Claims

1. Icing machine (1) for icing seafood products (2), comprising a tank (3) containing water wherein frozen seafood products (2) are immersed; and conveying means (5) movable with respect to the tank (3) to intercept the seafood products (2) immersed in the water and to drive them progressively above the free surface (16) of the water, characterised in that the tank (3) presents a first bottom surface (7) so conformed as to present at least a top part (15a) emerging from the free surface (16) of the water and in that the conveying means comprise sliding elements (5a) movable with respect to the first bottom surface (7) which intercept the seafood products (2) making them progressively climb and descend along said one or each top part (15a) thereby allowing the water, which laps the emerged products (2), to freeze and coat the products (2) themselves with a layer of ice.

2. Machine, according to claim 1, characterised in that said first bottom surface (7) is so conformed as to present a plurality of humps (15) arranged in succession along the route of the sliding elements (5a).

3. Machine, according to claim 2, characterised in that said humps (15) have curvilinear development.

4. Machine, according to one of the previous claims, characterised in that the first bottom surface (7) has sinusoidal profile.

5. Machine, according to claim 1, characterised in that the water is still inside the tank (3).

6. Machine, according to any one of the previous claims, characterised in that the water is contained in a quantity correlated with the geometric conformation of the first bottom surface (7).

7. Machine, according to claim 6, characterised in that the volume of water is correlated to the geometric conformation of the first bottom surface (7) of the tank (3) so as to define, with the seafood products (2) thrust by the sliding elements (5a) substantially equal routes above and below the free surface (16) of the water.

8. Machine, according to any one of the previous claims, characterised in that said tank (3) comprises a second bottom surface (8) delimiting in combination with the first bottom surface (7) an intermediate gap (9).

9. Machine, according to claim 8, characterised in that the first bottom surface (7) is holed in such a way as to allow the solid particles released by the seafood products (2) to settle and collect in the gap (9).

10. Machine, according to claim 8, characterised in that the first bottom surface (7) can be lifted from the tank (3) to allow access to said gap (9).

11. Machine, according to one of the claims from 8 to 10, characterised in that said first and second bottom surfaces (7,8) are mutually articulated and in that it comprises actuating means (22) to move said bottom surfaces (7,8) relatively to one another.

12. Machine, according to claim 11, characterised in that said first bottom surface (7) is borne by a tank structure (19) articulated to the tank (3) and movable with respect to the tank (3) upon the activation of the actuating means (22).

13. Machine, according to one of the previous claims, characterised in that said sliding elements (5a) comprise elongated plates traversing said tank (3).

14. Machine, according to one of the previous claims, characterised in that said sliding elements (5a) are borne by two chains (5b) closed in a loop which evolve along vertical lateral walls (10) of the tank (3).

15. Machine, according to one of the previous claims, characterised in that said sliding elements (5a) are holed.

16. Machine, according to one of the previous claims, characterised in that said first bottom surface (7) is joined with an inclined ramp (13) located above the free surface (16) of the water.

17. Machine, according to claim 16, characterised in that said ramp (13) is made of polyethylene.

18. Machine, according to claim 1, characterised in that it comprises means (4) for introducing the seafood products (2) so shaped as to unload the products (2) in correspondence with a dip (18) of the first bottom surface (7) submerged with respect to the free surface (16) of the water.

19. Machine, according to claim 18, characterised in that the introducing means comprise two slides (4a,4b) opposed, inclined and with opposite slopes.

20. Machine, according to claim 19, characterised in that a first introducing slide (4a) is made of polyethylene and a second slide (4b) is made of silicone rubber.

21. Machine, according to claim 1, characterised in that it comprises a refrigerating station (23) associated to the tank (3) and comprising a mixing heat exchanger (24) containing ice in chips for chilling the water of the tank (3).
